# EUROPEAN PATENT APPLICATION

(11) **EP 1 936 962 A2**
(43) Date of publication of application: **25.06.2008**
(21) Application number: 07114307.7
(22) Date of filing: 14.08.2007
(51) Int. Cl.: H04N 5/445, H04N 5/44

(54) **Remote controller, image system comprising the same, and controlling method thereof**

(30) Priority: 19.12.2006 KR 20060130412
(71) Applicant: Samsung Electronics Co., Ltd., Suwon-si, Gyeonggi-do 442-742 (KR)
(72) Inventor: CHO, Yong-jin, Suwon-si, Gyeonggi-do (KR)
(74) Representative: Robinson, Ian Michael

(57) **Abstract**

A remote controller (100) that controls a broadcasting receiving apparatus (200) having a wireless receiving unit (210) remotely is provided. The remote controller (100) includes a first sensing unit (121) that senses external touch; a second sensing unit (122) that is provided adjacent to the first sensing unit (121) and senses external touch; a data processing unit (130) that detects a touch direction according to a touched order between the first sensing unit (121) and the second sensing unit (122), and outputs a channel search signal to search for a channel sequentially according to a predetermined order corresponding to the touch direction; and a wireless transmitting unit (140) that transmits the channel search signal to the broadcasting receiving apparatus wirelessly.

## Description

### BACKGROUND OF THE INVENTION

### Field of Invention

Apparatuses and methods consistent with the present invention relate to a remote controller, an image system including the same, and a controlling method thereof.

### Description of the Related Art

In general, a remote controller (which may be abbreviated as 'remocon') has been used to remotely control an image displayed on an image processing apparatus.

Particularly, in case of a television, a remote controller includes numerical buttons for input of Arabic numerals from 0 to 9, top, bottom, left and right shift buttons, setup and power buttons, a shortcut key for moving to a frequently used function, and so on. A user may choose a channel using a plurality of buttons or select a channel using the shift buttons.

On the other hand, in case of a digital television having many channels or a remote controller that controls external apparatuses in addition to the television, one remote controller may include a great deal of buttons.

If a user uses such a remote controller including a lot of buttons, it is inconvenient for the user to locate and push a channel selection button among the plurality of buttons when the user selects and changes a channel of the television.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

Accordingly, it is an aspect of the present invention to provide a remote controller that allows a user to select a channel without difficulty, an image system including the same, and a control method thereof.

Additional aspects of the present invention will be set forth in part in the description which follows and, in part, will be obvious from the description, or may be learned by practice of the present invention.

According to an aspect of the present invention, there is provided a remote controller that controls a broadcasting receiving apparatus having a wireless receiving unit remotely, comprising: a first sensing unit that senses a first external touch; a second sensing unit that is provided adjacent to the first sensing unit and senses a second external touch; a data processing unit that detects a touch direction according to a touched order between the first sensing unit and the second sensing unit, and outputs a channel search signal to search for a channel sequentially according to a predetermined order corresponding to the touch direction; and a wireless transmitting unit that transmits the channel search signal to the broadcasting receiving apparatus wirelessly.

The data processing unit may output a channel up signal to search for the channel according to a first order if the data processing unit detects a first touch direction in which the first sensing unit is first touched and the second sensing unit is then touched, and output a channel down signal to search for the channel according to a second order reverse to the first order if the data processing unit detects a second touch direction in which the second sensing unit is first touched and the first sensing unit is then touched.

The data processing unit may further output a channel down signal to search for the channel according to a second order reverse to the first order if the data processing unit detects a second touch direction in which the second sensing unit is first touched and the first sensing unit is then touched.

The data processing unit may further output a channel continuous up signal to search for the channel continuously according to a first order if the first sensing unit is touched for a predetermined time, and outputs a channel continuous down signal to search for the channel continuously according to a second order if the second sensing unit is touched for a predetermined time.

Additionally, the data processing unit may output a channel selection signal to select a channel preset depending on a type of touch of the first sensing unit or the second sensing unit.

The type of touch may comprise at least one of a strong touch and a weak touch.

The remote controller may further comprise a touch pad including the first sensing unit and the second sensing unit.

The remote controller may further comprise a heat-sensitive sensor including the first sensing unit and the second sensing unit.

The remote controller may further comprise a current sensor including the first sensing unit and the second sensing unit.

The remote controller may further comprise: a third sensing unit that senses a third external touch; and a fourth sensing unit that is provided adjacent to the third sensing unit and senses a fourth external touch, wherein the data processing unit detects another touch direction according to a touched order between the third sensing unit and the fourth sensing unit, and outputs a volume control signal to increase or decrease volume gradually corresponding to the another touch direction.

According to another aspect of the present invention, there is provided an image system comprising: a broadcasting receiving apparatus that tunes a plurality of channels; and a remote controller that controls the broadcasting receiving apparatus remotely, the remote controller comprising: a first sensing unit that senses a first external touch, a second sensing unit that is provided adjacent to the first sensing unit and senses a second external touch, a data processing unit that detects a touch direction according to a touched order between the first sensing unit and the second sensing unit, and outputs a channel search signal to search for the channel sequentially according a predetermined order corresponding to the touch direction, and a wireless transmitting unit that transmits the channel search signal to the broadcasting receiving apparatus wirelessly, and the broadcasting receiving apparatus comprising: a wireless receiving unit that receives the channel search signal wirelessly, and a channel changing unit that changes the channel based on the received channel search signal.

The data processing unit may output a channel up signal to search for the channel according to a first order if the data processing unit detects a first touch direction in which the first sensing unit is first touched and the second sensing unit is then touched, and outputs a channel down signal to search for the channel according to a second order reverse to the first order if the data processing unit detects a second touch direction in which the second sensing unit is first touched and the first sensing unit is then touched, and wherein the channel changing unit tunes the channel according to the first order upon receiving the channel up signal and tunes the channel according to the second order upon receiving the channel down signal.

The data processing unit may output a channel continuous up signal to search for the channel continuously according to a first order if the touch of the first sensing unit is lasted for a predetermined time, and outputs a channel continuous down signal to search for the channel continuously according to a second order if the touch of the second sensing unit is lasted for a predetermined time, and wherein the channel changing unit tunes the channel continuously according to the first order upon receiving the channel continuous up signal and tunes the channel continuously according to the second order upon receiving the channel continuous down signal.

The data processing unit may output a channel selection signal to select a channel preset depending on a type of touch of the first sensing unit or the second sensing unit, and wherein the channel changing unit tunes the selected channel upon receiving the channel selection signal.

The type of touch may comprise at least one of a strong touch and a weak touch.

The broadcasting receiving apparatus may further include a channel setting unit that sets the channel selected according to the channel selection signal and sets the first sensing unit or the second sensing unit corresponding to the selected channel and the type of touch of the corresponding sensing unit.

The channel setting unit may include a user interface (UI) generating unit.

The remote controller may further comprise: a third sensing unit that senses a third external touch, and a fourth sensing unit that is provided adjacent to the third sensing unit and senses a fourth external touch, wherein the data processing unit detects another touch direction according to the touched order between the third sensing unit and the fourth sensing unit, and outputs a volume control signal to increase or decrease volume gradually corresponding to the another touch direction.

The broadcasting receiving apparatus may include a volume changing unit that increases or decreases volume upon receiving the volume control signal.

According to an aspect of the present invention, there is provided a control method of an image system comprising a broadcasting receiving apparatus that tunes a plurality of channels, and a remote controller that controls the broadcasting receiving apparatus remotely and comprises a first sensing unit that senses a first external touch, and a second sensing unit that is provided adjacent to the first sensing unit and senses a second external touch, the control method comprising: detecting a touch direction according to a touched order between the first sensing unit and the second sensing unit; generating a channel search signal to search for a channel sequentially according a predetermined order corresponding to the touch direction; and changing the channel based on the channel search signal.

The touch direction may comprise a first touch direction in which the first sensing unit is first touched and the second sensing unit is then touched and a second touch direction in which the second sensing unit is first touched and the first sensing unit is then touched.

The touch direction further comprises a second touch direction in which the second sensing unit is first touched and the first sensing unit is then touched.

The channel search signal may comprise a channel up signal to search for the channel according to a first order corresponding to the first touch direction and a channel down signal to search for the channel according to a second order that is reverse to the first order and corresponds to the second touch direction.

The channel search signal may further comprise a channel down signal to search for the channel according to a second order that is reverse to the first order and corresponds to the second touch direction.

The control method may further comprise: generating a channel continuous up signal to search for the channel continuously according to a first order if the first sensing unit is touched for a predetermined time; and changing the channel continuously according to the first order.

The control method may further comprise: generating a channel continuous down signal to search for the channel continuously according to a second order different from the first order if the second sensing unit is touched for a predetermined time; and changing the channel continuously according to the second order.

The control method may further comprise: setting a predetermined channel, and the first sensing unit or the second sensing unit to select the predetermined channel; setting a type of touch of the set first sensing unit or the second sensing unit; and tuning the predetermined channel if there occurs the type of touch set in the set first or second sensing unit.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a view showing a remote controller according to an exemplary embodiment of the present invention;
FIG. 2 is a control block diagram of the remote controller according to an exemplary embodiment of the present invention;
FIG. 3 is a control block diagram of an image system including the remote controller shown in FIG. 2;
FIG. 4 is a control flow chart illustrating a control method of the image system shown in FIG. 3 according to an exemplary embodiment of the present invention;
FIG. 5 is a control flow chart illustrating a control method of the image system shown in FIG. 3 according to an exemplary embodiment of the present invention;
FIG. 6 is a control block diagram of an image system according to an exemplary embodiment of the present invention;
FIG. 7 is a view illustrating a user interface (UI) generated according to an exemplary embodiment of the present invention; and
FIG. 8 is a view showing a remote controller according to an exemplary embodiment of the present invention.

### DETAILED DESCRIPTION OF THE EXEMPLARY EMBODIMENTS OF THE INVENTION

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

In the following exemplary embodiments, the same components are denoted by the same reference numerals, and explanation thereof will be representatively given in a first exemplary embodiment but will be omitted in other exemplary embodiments.

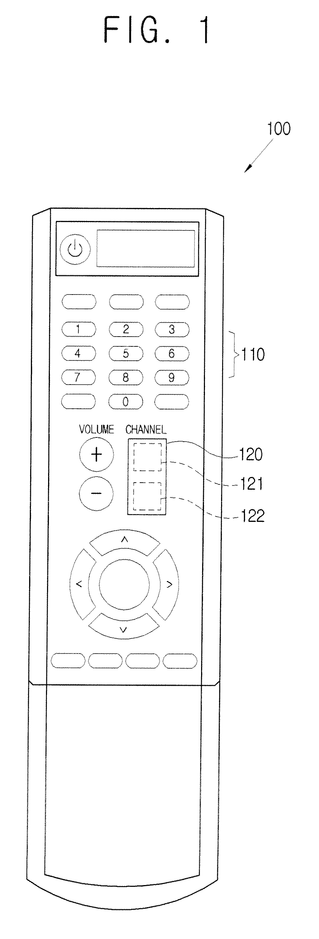

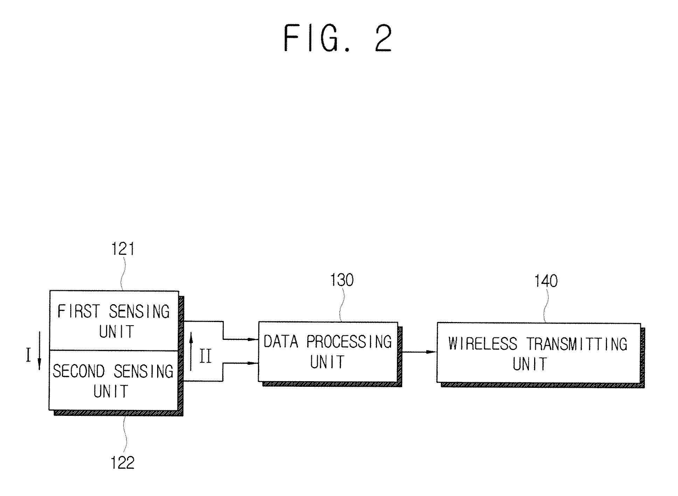

FIG. 1 is a view showing a remote controller according to a first exemplary embodiment of the present invention, and FIG. 2 is a control block diagram of the remote controller according to this exemplary embodiment.

A shown in FIG. 1, a remote controller 100 includes a channel input button 110 that allows a user to select a channel directly, a channel sensing unit 120, top, bottom, left and right shift buttons, a power button, and so on. In addition, as shown in FIG. 2, the remote controller 100 further includes a data processing unit 130 that generates a certain control signal when the user touches either a first sensing unit 121 or a second sensing unit 122, and a wireless transmitting unit 140 that transmits a control signal, which is outputted from the data processing unit 130, to an external broadcasting receiving apparatus wirelessly.

The channel sensing unit 120 includes the first sensing unit 121 and the second sensing unit 122 that sense external touch. The first sensing unit 121 and the second sensing unit 122 are touch sensors which may be provided as one or two touch pads, one or two current sensors using minute current flowing through a human body, or on or two heat-sensitive sensors that are responsive to heat, or others known in the art. The first sensing unit 121 and the second sensing unit 122 are vertically adjacent to each other. It is preferable but not necessary that a structure such as a frame is absent between the first sensing unit 121 and the second sensing unit 122 so that the user may operate the first and second sensing units 121 and 122 without difficulty. The first sensing unit 121 and the second sensing unit 122 may be horizontally or obliquely arranged only if they are adjacent to each other.

The user may control the first and second sensing units 121 and 122 in a manner like touching, ceasing of touching, or touching for a predetermined time. The data processing unit 130 detects the touch by the user and outputs the control signal to control the external broadcasting receiving apparatus.

In this exemplary embodiment, the remote controller 100 outputs the control signal to search for channels of the broadcasting receiving apparatus according to a touched order by which the user touches either the first sensing unit 121 or the second sensing unit 122. For example, the broadcasting receiving apparatus receives a broadcasting signal and tunes a channel. Different channel numbers are assigned to different channels in order to identify a channel to be tuned. In the related art, the user changes a channel while increasing or decreasing a channel number using an up-button or a down-button. That is, the up-button is used to increase the channel number while the down-button is used to decrease the channel number.

In this exemplary embodiment, instead of the up-button and the down-button, the first sensing unit 121 and the second sensing unit 122 are used to change the channel, and the data processing unit 130 detects a touch direction according to a touched order of the first and second sensing units 121 and 122. If the user first touches the first sensing unit 121 and then touches the second sensing unit 122, the data processing unit 130 detects a first touch direction (I) and outputs a channel-up signal to search for the channels according to a first order corresponding to the first touch direction (I). On the contrary, if the user first touches the second sensing unit 122 and then touches the first sensing unit 121, the data processing unit 130 detects a second touch direction (II) and outputs a channel-down signal to search for the channels according to a second order corresponding to the second touch direction (II). In this exemplary embodiment, the first order means a direction in which the channel number increases and the second order means a direction in which the channel number decreases. The channel change order may be varied depending on the touch direction by user's setup.

The operation of first touching the first sensing unit 121 and then touching the second sensing unit 122 is possible by a separate operation of touching the first sensing unit 121, ceasing the touching of the first sensing unit 121, and then, touching the second sensing unit 122. Alternatively, this operation is also possible by an operation of sweeping the channel sensing unit 120 when the user moves his/her finger from the first sensing unit 121 to the second sensing unit 122.

In this manner according to this exemplary embodiment, the remote controller 100 eliminates the user's inconvenience of pushing the existing up-button and down-button by using the touch sensors to allow the user to change the channel instinctively.

In addition, if the user touches one of the first and second sensing units 121 and 122 for more than a predetermined time, the channels can be searched for according to a particular order. For example, if the user touches the first sensing unit 121 longer than a predetermined time, the data processing unit 130 outputs a channel continuation up signal that search the channels continuously according to the first order. On the other hand, if the user touches the second sensing unit 122 longer than a predetermined time, the data processing unit 130 outputs a channel continuation down signal that searches the channels continuously according to the second order. That is, if the user continues touching the first and second sensing units 121 and 122, the channels are continuously changed as if the channel number is increased or decreased in the related art by the up-button or down-button being repeatedly pushed. If the user ceases the touch of the first and second sensing units 121 and 122, the change of the channels is stopped.

In addition, the data processing unit 130 can output a channel selection signal to select a channel for preset depending on a type of touch of the first sensing unit 121 and second sensing unit 122 in a manner like touching one of the first and second sensing units 121 and 122 once for a short time and touching one of the first and second sensing units 121 and 122 for two times in a short time. The type of touch may be varied depending on the choice between the first sensing unit 121 and the second sensing unit 122, the number of a touch time and a touched duration time of the first and second sensing units 121 and 122, and the data processing unit 130 can detect this type of touch and output the channel selection signal corresponding to the detected type of touch.

The data processing unit 130 may include an instruction recognizing unit that analyzes information transmitted from the sensing units 121 and 122 to grasp user's intention and a code converting unit that converts a control signal, which is outputted from the instruction recognizing unit, into a particular code. The wireless transmitting unit 140 changes the code generated in the code converting unit to a radio frequency and transmits the radio frequency to the outside.

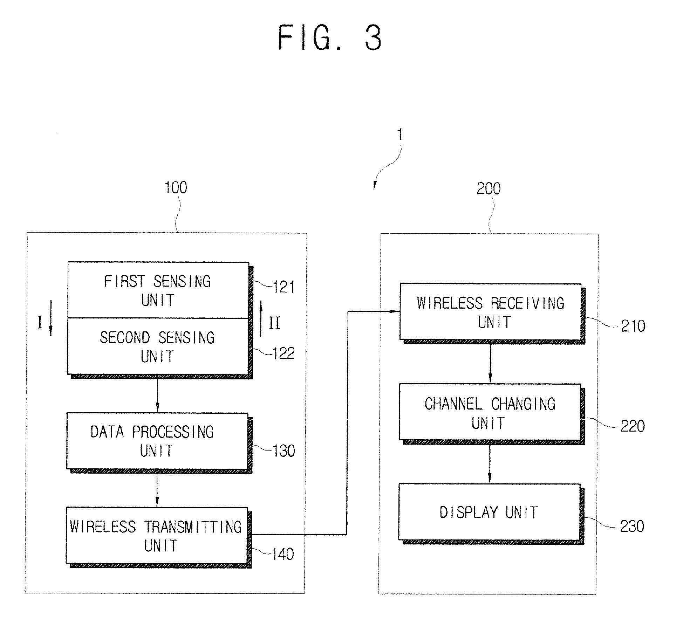

FIG. 3 is a control block diagram of an image system 1 including the remote controller shown in FIG. 2. The image system 1 includes the remote controller 100 shown in FIG. 2 and a broadcasting receiving apparatus 200 that receives the broadcasting signals. The broadcasting receiving apparatus 200 includes a wireless receiving unit 210, a channel changing unit 220 and a display unit 230 that displays the broadcasting signals. The broadcasting receiving apparatus 200 may be provided as a set-top box including only a tuner that tunes the broadcasting signals, without including the display unit 230.

The wireless receiving unit 210 receives the control signal from the remote controller 100 and outputs the received control signal to the channel changing unit 220.

The display unit 230 displays the broadcasting signal corresponding to a channel tuned in the channel changing unit 220. The display unit 230 includes a display module (not shown) on which an image is displayed and a module driving unit (not shown) that processes the broadcasting signal inputted from the outside and displays the image on the display module. In this exemplary embodiment, an example of the display module may include various types of display modules such as a digital light processing (DLP) display, a liquid crystal display (LCD), a plasma display panel (PDP) and others known in the art.

The channel changing unit 220 changes a channel according to the control signal outputted from the data processing unit 130. Although not shown, the channel changing unit 220 includes a storing unit that stores channel numbers and a tuning unit that tunes a channel upon receiving the control signal to change the channel.

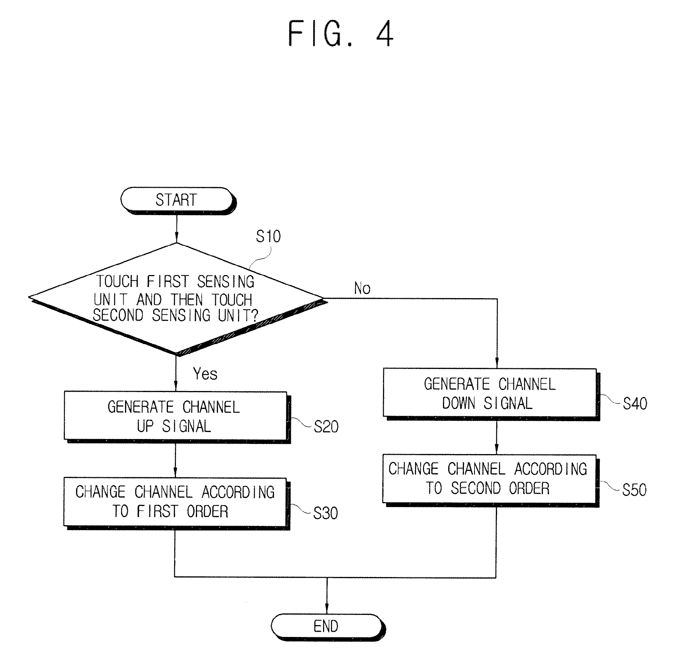

FIG. 4 is a control flow chart illustrating a control method of the image system 1 shown in FIG. 3 according to the first exemplary embodiment of the present invention. The control method according to this exemplary embodiment is to change the channel according to a predetermined order corresponding to the touch direction of the sensing units 121 and 122.

First, if a user continuously touches the first sensing unit 121 and the second sensing unit 122 which are adjacent to each other, the data processing unit 130 determines whether or not the first sensing unit 121 is first touched before the second sensing unit 122 is touched at operation S10.

If it is determined that the first sensing unit 121 is first touched before the second sensing unit 122 is touched, the data processing unit 130 generates a channel up signal to search for channels according to the first order by which a channel number increases at operation S20.

The generated channel up signal is inputted to the channel changing unit 220 via the wireless transmitting unit 140 and the wireless receiving unit 210.

Then, the channel changing unit 220 changes the channel according to the first order at operation S30.

On the other hand, if it is determined that the second sensing unit 122 is first touched and the first sensing unit 121 is then touched, the data processing unit 130 generates a channel down signal to search for channels according to the second order by which a channel number decreases at operation S40.

Then, the channel changing unit 220 inputted with the channel down signal changes the channel according to the second order at operation S50.

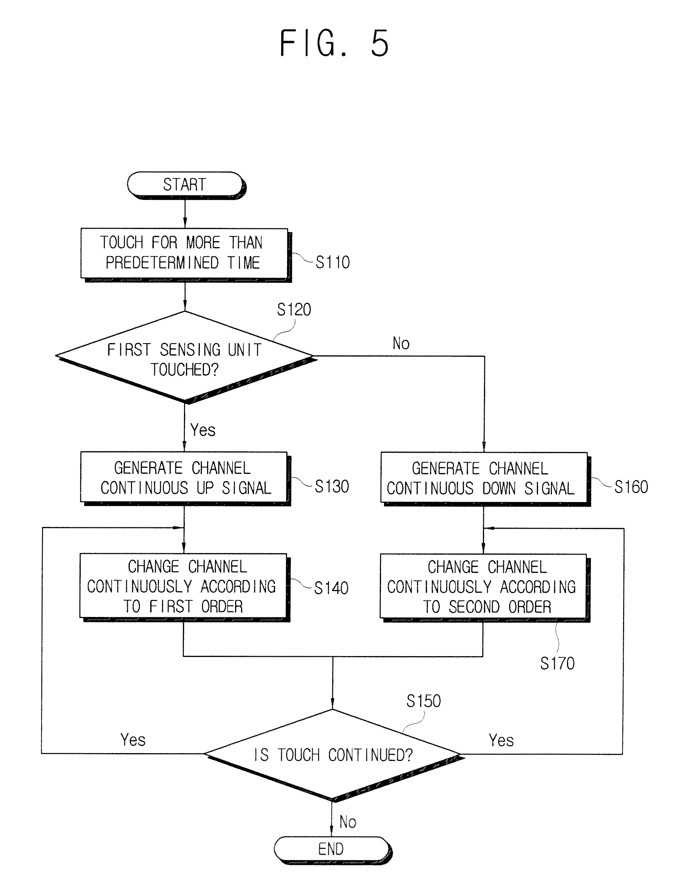

FIG. 5 is a control flow chart illustrating a control method of the image system shown in FIG. 3 according to a second exemplary embodiment of the present invention. The control method according to this exemplary embodiment is to change a channel continuously if a user touches the sensing units 121 and 122 longer than the predetermined time.

First, if it is detected that the user continues the touching of the sensing units 121 and 122 longer than the predetermined time at operation S110, the data processing unit 130 determines whether the first sensing unit 121 is being touched.

If it is determined that the first sensing unit 121 is being touched, the data processing unit 130 generates a channel continuous up signal to change the channel continuously according to the first order at operation S130.

The channel changing unit 220 receiving the channel continuous up signal changes the channel continuously according to the first order at operation S140.

The channel changing unit 220 stops the change of the channel if the first sensing unit 121 ceases to be touched in the course of changing the channel continuously, and maintains the change of the channel if the first sensing unit 121 continues to be touched at operation S150.

On the other hand, if it is determined that the second sensing unit 122, not the first sensing unit 121, is touched, the data processing unit 130 generates a channel continuous down signal to change the channel continuously according to the second order at operation S160.

The channel changing unit 220 receiving the channel continuous down signal changes the channel continuously according to the second order at operation S170. In this case, the channel changing unit 220 stops the change of the channel if the channel changing unit 220 receives a control signal to stop touching the second sensing unit 122.

A channel changing direction for the sensing units 121 and 122 may be arbitrarily set by the user, without restricting the scope of the invention.

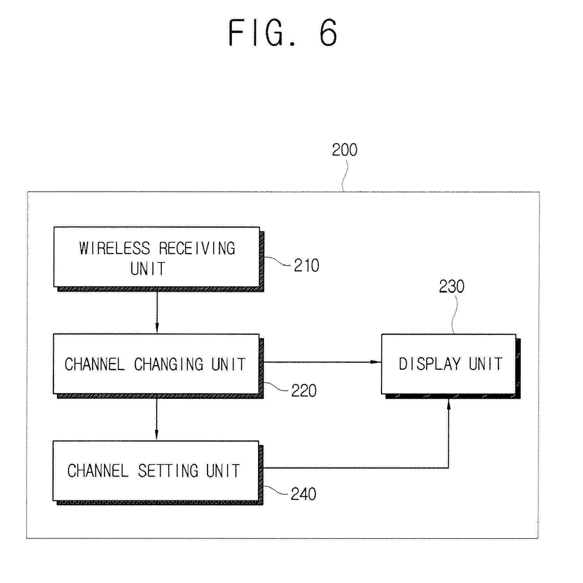

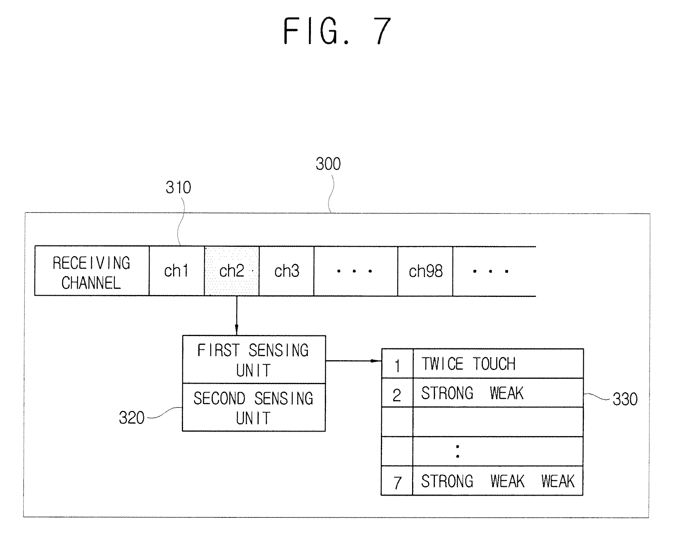

FIG. 6 is a control block diagram of an image system 1 according to the second exemplary embodiment of the present invention and FIG. 7 is a view illustrating a user interface (UI) generated according to this exemplary embodiment.

As shown in FIG. 6, a broadcasting receiving apparatus according to this exemplary embodiment further includes a channel setting unit 240 that sets a channel selected according to a channel selection signal. In this exemplary embodiment, the remote controller 100 also includes a channel input button 110 to allow a user to input a channel number. In addition, in order to provide a variety of user interfaces, the image system 1 according to this exemplary embodiment uses the channel sensing unit 120 to allow a user to select a particular channel as well as changing the channel.

The channel setting unit 240 includes a UI generating unit that provides a channel setting UI 300 to allow the user to select a channel using the channel sensing unit 120.

As shown in FIG. 7, the channel setting UI 300 includes a channel selection bar 310 having a plurality of channel numbers, a sensing unit selection menu 320 that allows the user to select one of the sensing units 121 and 122, and a touch type setting menu 330 that allows the user to set a type of touch.

The user uses the channel selection bar 310 to select a channel through the channel sensing unit 120. Although the type of touch may be set for all tunable channels in the broadcasting receiving apparatus, the user may set the type of touch for only his/her favorite channels. As shown in FIG. 7, if channel No. 2 is selected, then the sensing selection menu 320 is displayed.

The user may select one between the first sensing unit 121 and the second sensing unit 122 through the sensing unit selection menu 320. When the user selects one of the sensing units 121 and 122, the touch type setting menu 330 is displayed.

The touch type setting menu 330 includes various instances for the touch type of the sensing units 121 and 122. For example, for selection of channel No. 2, it may be set that the first sensing unit 121 is twice touched, or strongly touched and then weakly touched. The strong and weak of touch may be represented by either a contact pressure or a touched time. Alternatively, the user may directly set different types of touch.

In this manner, the user may set the type of touch for a particular channel through the channel setting unit 240. Information on the set type of touch for the particular channel is transmitted to the data processing unit 130 of the remote controller 101 and is set to be a sensing signal which can be processed therein. That is, the remote controller can recognize a control signal related to the channel selection set in the broadcasting receiving apparatus. Alternatively, the user may match a particular channel to a coded type of touch of the remote controller for channel selection.

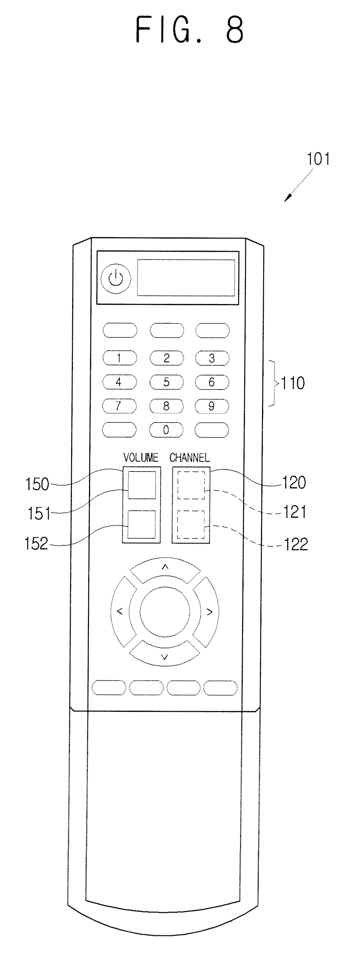

FIG. 8 is a view showing a remote controller 101 according to a third exemplary embodiment of the present invention. The remote controller 101 shown in FIG. 8 has most of the configuration similar to that of the remote controller shown in FIG. 1 except that volume adjusting buttons shown in FIG. 1 are changed to touch sensors. Specifically, the remote controller according to the third exemplary embodiment further includes a volume sensing unit 150 using directionality in order to control volume in addition to the channel sensing unit 120 that changes the channels. The volume sensing unit 150 includes a first volume sensing unit 151 and a second volume sensing unit 152 which are operated in a manner similar to the first and second sensing units 121 and 122.

The data processing unit 130 outputs a volume control signal to increase or decrease volume gradually according to a touch direction of the first volume sensing unit 151 and the second volume sensing unit 152.

The volume control signal is transmitted to the broadcasting receiving apparatus 200 wirelessly and a volume controller (not shown) to control the volume increases or decreases the volume based on the volume control signal.

As an alternative exemplary embodiment, top and bottom or left and right buttons to control operations other than the channel change and the volume control with directionality may be provided as touch sensors.

As described above, the remote controller according to the exemplary embodiments improves user's accessibility to the remote controller and user's operability of the remote controller by generating the control signal having directionality through the touch sensors.

As apparent from the above description, the present invention provides a remote controller that allows a user to select a channel without difficulty, an image system including the same, and a control method thereof.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A remote controller (100) that controls a broadcasting receiving apparatus (200) having a wireless receiving unit (210) remotely, the remote controller (100) comprising:
a first sensing unit (121) which senses a first external touch;
a second sensing unit (122) which is provided adjacent to the first sensing unit (121) and senses a second external touch;
a data processing unit (130) which detects a touch direction according to a touched order between the first sensing unit (121) and the second sensing unit (122), and outputs a channel search signal to search for a channel sequentially according to a predetermined order corresponding to the touch direction; and
a wireless transmitting unit (140) which transmits the channel search signal to the broadcasting receiving apparatus wirelessly.

2. The remote controller (100) according to claim 1, wherein the data processing unit (130) outputs a channel up signal to search for the channel according to a first order if the data processing unit (130) detects a first touch direction in which the first sensing unit (121) is first touched and the second sensing unit (122) is then touched.

3. The remote controller (100) according to claim 2, wherein the data processing unit (130) further outputs a channel down signal to search for the channel according to a second order reverse to the first order if the data processing unit (130) detects a second touch direction in which the second sensing unit (122) is first touched and the first sensing unit (121) is then touched.

4. The remote controller (100) according to claim 1, wherein the data processing unit (130) outputs a channel continuous up signal to search for the channel continuously according to a first order if the first sensing unit (121) is touched for a predetermined time.

5. The remote controller (100) according to claim 4, wherein the data processing unit (130) further outputs a channel continuous down signal to search for the channel continuously according to a second order if the second sensing unit (122) is touched for a predetermined time.

6. The remote controller (100) according to claim 1, wherein the data processing unit (130) outputs a channel selection signal to select a channel preset depending on a type of touch of the first sensing unit (121) or the second sensing unit (122).

7. The remote controller (100) according to claim 6, wherein the type of touch comprises at least one of a strong touch and a weak touch.

8. The remote controller (100) according to any preceding claim, further comprising a touch pad including the first sensing unit (121) and the second sensing unit (122).

9. The remote controller (100) according to any of claims 1 to 7, further comprising a heat-sensitive sensor including the first sensing unit (121) and the second sensing unit (122).

10. The remote controller (100) according to any of claims 1 to 7, further comprising a current sensor including the first sensing unit (121) and the second sensing unit (122).

11. The remote controller (100) according to any preceding claim, further comprising:
a third sensing unit (151) that senses a third external touch; and
a fourth sensing unit (152) that is provided adjacent to the third sensing unit (151) and senses a fourth external touch, wherein the data processing unit (130) detects another touch direction according to a touched order between the third sensing unit (151) and the fourth sensing unit (152), and outputs a volume control signal to increase or decrease volume gradually corresponding to the another touch direction.

12. An image system comprising:
a broadcasting receiving apparatus (200) which tunes a plurality of channels; and
a remote controller (100) which controls the broadcasting receiving apparatus remotely, wherein the remote controller (100) comprises:
a first sensing unit (121) which senses a first external touch, a second sensing unit (122) which is provided adjacent to the first sensing unit (121) and senses a second external touch,
a data processing unit (130) which detects a touch direction according to a touched order between the first sensing unit (121) and the second sensing unit (122), and outputs a channel search signal to search for the channel sequentially according a predetermined order corresponding to the touch direction, and
a wireless transmitting unit (140) which transmits the channel search signal to the broadcasting receiving apparatus wirelessly, and
the broadcasting receiving apparatus (200) comprises:
a wireless receiving unit (210) which receives the channel search signal wirelessly, and
a channel changing unit (220) which changes the channel based on the received channel search signal.

13. The image system according to claim 12, wherein the data processing unit (130) outputs a channel up signal to search for the channel according to a first order if the data processing unit (130) detects a first touch direction in which the first sensing unit (121) is first touched and the second sensing unit (122) is then touched, and outputs a channel down signal to search for the channel according to a second order reverse to the first order if the data processing unit (130) detects a second touch direction in which the second sensing unit (122) is first touched and the first sensing unit (121) is then touched, and wherein the channel changing unit tunes the channel according to the first order upon receiving the channel up signal and tunes the channel according to the second order upon receiving the channel down signal.

14. The image system according to claim 12, wherein the data processing unit (130) outputs a channel continuous up signal to search for the channel continuously according to a first order if the touch of the first sensing unit (121) is lasted for a predetermined time, and outputs a channel continuous down signal to search for the channel continuously according to a second order if the touch of the second sensing unit (122) is lasted for a predetermined time, and
wherein the channel changing unit tunes the channel continuously according to the first order upon receiving the channel continuous up signal and tunes the channel continuously according to the second order upon receiving the channel continuous down signal.

15. The image system according to claim 12, wherein the data processing unit (130) outputs a channel selection signal to select a channel preset depending on a type of touch of the first sensing unit (121) or the second sensing unit (122), and
wherein the channel changing unit tunes the selected channel upon receiving the channel selection signal.

16. The image system according to claim 15, wherein the type of touch comprises at least one of a strong touch and a weak touch.

17. The image system according to any of claims 12 to 16, wherein the broadcasting receiving apparatus (200) further includes a channel setting unit that sets the channel selected according to the channel selection signal and sets the first sensing unit (121) or the second sensing unit (122) corresponding to the selected channel and the type of touch of the corresponding sensing unit.

18. The image system according to claim 17, wherein the channel setting unit includes a user interface (UI) generating unit.

19. The image system according to any of claims 12 to 18, wherein the remote controller (100) further comprises:
a third sensing unit (151) that senses a third external touch, and
a fourth sensing unit (152) that is provided adjacent to the third sensing unit (151) and senses a fourth external touch,
wherein the data processing unit (130) detects another touch direction according to the touched order between the third sensing unit (151) and the fourth sensing unit (152), and outputs a volume control signal to increase or decrease volume gradually corresponding to the another touch direction.

20. The image system according to claim 19, wherein the broadcasting receiving apparatus (200) includes a volume changing unit that increases or decreases volume upon receiving the volume control signal.

21. A control method of an image system comprising a broadcasting receiving apparatus (200) that tunes a plurality of channels, and a remote controller (100) that controls the broadcasting receiving apparatus remotely and comprises a first sensing unit (121) that senses a first external touch, and a second sensing unit (122) that is provided adjacent to the first sensing unit (121) and senses a second external touch, the control method comprising:
detecting a touch direction according to a touched order between the first sensing unit (121) and the second sensing unit (122);
generating a channel search signal to search for a channel sequentially according a predetermined order corresponding to the touch direction; and
changing the channel based on the channel search signal.

22. The control method according to claim 21, wherein the touch direction comprises a first touch direction in which the first sensing unit (121) is first touched and the second sensing unit (122) is then touched.

23. The control method according to claim 22, wherein the touch direction further comprises a second touch direction in which the second sensing unit (122) is first touched and the first sensing unit (121) is then touched.

24. The control method according to claim 22, wherein the channel search signal comprises a channel up signal to search for the channel according to a first order corresponding to the first touch direction.

25. The control method according to claim 24, wherein the channel search signal further comprises a channel down signal to search for the channel according to a second order that is reverse to the first order and corresponds to the second touch direction.

26. The control method according to claim 21, further comprising:
generating a channel continuous up signal to search for the channel continuously according to a first order if the first sensing unit (121) is touched for a predetermined time; and
changing the channel continuously according to the first order.

27. The control method according to claim 26, further comprising:
generating a channel continuous down signal to search for the channel continuously according to a second order different from the first order if the second sensing unit (122) is touched for a predetermined time; and
changing the channel continuously according to the second order.

28. The control method according to claim 21, further comprising:
setting a predetermined channel, and the first sensing unit (121) or the second sensing unit (122) to select the predetermined channel;
setting a type of touch of the set first sensing unit (121) or the second sensing unit (122); and
tuning the predetermined channel if there occurs the type of touch set in the set first or second sensing unit (122).
